# EUROPÄISCHE PATENTSCHRIFT

(11) **EP 4 230 019 B1**
(45) Veröffentlichungstag und Bekanntmachung des Hinweises auf die Patenterteilung: **05.11.2025**
(21) Anmeldenummer: 23156786.8
(22) Anmeldetag: 15.02.2023
(51) Int. Cl.: A01C 15/04, A01C 21/00

(54) **PNEUMATISCHER DÜNGERSTREUER**
PNEUMATIC FERTILIZER SPREADER
EPANDEUR PNEUMATIQUE D'ENGRAIS

(30) Priorität: 17.02.2022 DE 102022103794
(43) Veröffentlichungstag der Anmeldung: 23.08.2023
(73) Patentinhaber: HORSCH LEEB Application Systems GmbH, 94405 Landau an der Isar (DE)
(72) Erfinder: SALLER, Fabian, 94405 Landau an der Isar (DE)
(74) Vertreter: v. Bezold & Partner Patentanwälte - PartG mbB

(56) Entgegenhaltungen:
- EP-A1- 3 881 660
- US-A1- 2017 265 379

## Beschreibung

Die Erfindung betrifft einen pneumatischen Düngerstreuer zur Verteilung von granularem Streugut.

Betreffend den Stand der Technik ist zunächst zu verweisen auf Dokument US 2017/265379 A1. Die US 2017/265379 A1 offenbart eine Vorrichtung zum Ausbringen eines partikelförmigen Produkts auf eine Bodenoberfläche in der Nähe von benachbart beabstandeten Pflanzenreihen. Die Vorrichtung umfasst eine Vielzahl von Abwurfelementen, die von einer Auslegerstruktur getragen werden und seitlich so entlang dieser beabstandet sind, dass jedes Abwurfelement zwischen zwei benachbart beabstandeten Pflanzenreihen angeordnet ist. Das Abwurfelement erstreckt sich von der Auslegerstruktur nach unten in Richtung der Bodenoberfläche. Das Abwurfelement trägt einen Trichter, der eine bestimmte Menge eines partikelförmigen Produkts aufnimmt. Von einem unteren Teil des Abwurfelements ausgehende, divergierende Durchgänge für das partikelförmige Produkt befördern das partikelförmige Produkt aus den Trichtern auf die Bodenoberfläche neben den beiden nebeneinanderliegenden Pflanzenreihen.

Aus dem Stand der Technik sind pneumatische Düngerstreuer bekannt. Düngerstreuer dienen zur Verteilung von granularem (körnigem) Streugut (Dünger, Saatgut und/oder dergl.). Zum Ausbringen des körnigen Streuguts weisen derartige Düngerstreuer ein Verteilgestänge hoher Arbeitsbreite mit daran angeordneten Verteileinrichtungen bzw. Ausbringelementen (z. B. Pralltellern) auf. Das Verteilgestänge umfasst zwei seitliche Ausleger, die jeweils eine Mehrzahl von Verteilleitungen und Ausbringelementen zum Ausbringen des Materials aufweisen. Hierbei wird das Streugut entlang der Verteilleitungen, die zumindest abschnittsweise am Verteilgestänge angeordnet sind, mittels eines Luftvolumenstroms in Richtung der Ausbringelemente gefördert. Die Ausbringelemente weisen zum Ausbringen des Streuguts jeweils einen Prallteller zur Ausbildung eines Streufächers aus Streugut auf. Ein derartiger pneumatischer Düngerstreuer ist beispielsweise in der DE 10 2018 131 073 A1 beschrieben.

Pneumatische Düngerstreuer bieten gegenüber sog. Scheibenstreuern bzw. Zentrifugalstreuern, bei welchen die Verteilung des Streuguts mittels eines scheibenförmigen Schleuderwerks erfolgt, den Vorteil, dass teilflächenspezifische Anwendungen (z. B. Section-Control-Anwendungen) einfacher möglich sind und bei starken Winden ein besseres Streubild (Wurfbild) erzeugbar ist.

Bei der Ausbringung von Streugut auf eine landwirtschaftliche Nutzfläche kann es je nach Ausbringvorgang von Vorteil sein, wenn das Streugut in die unmittelbare Umgebung der jeweiligen Pflanzen auf der landwirtschaftlichen Nutzfläche abgegeben wird. Da die Aussaat einer Vielzahl von landwirtschaftlichen Nutzpflanzen entlang von Saatreihen erfolgt, bilden sich auf der landwirtschaftlichen Nutzfläche während der Wachstumsphase der Nutzpflanzen Pflanzenreihen aus. Für eine besonders effektive und wirksame Ausbringung von Streugut wäre daher die Möglichkeit einer reihenbezogenen Streugutausbringung wünschenswert, so dass das Streugut im Wesentlichen entlang von Ausbringstreifen ausgebracht wird. Die Ausbringstreifen können entlang von Pflanzenreihen oder, z. B. zur Unkrautbekämpfung, auch zwischen Pflanzenreihen verlaufen. Eine reihenbezogene Ausbringung entlang von Ausbringstreifen kann auch als Bandapplikation bezeichnet werden im Unterschied zur ganzflächigen Applikation von Streugut.

Bei aus der Praxis bekannten pneumatischen Düngerstreuern sind die am Verteilgestänge angeordneten Ausbringelemente, die jeweils über eine separate Verteilleitung (Förderleitung) mit Streugut versorgt werden, typischerweise im Abstand von 1,5 Metern angeordnet - in Längserstreckungsrichtung des Verteilgestänges gesehen. Der Grund ist, dass die Vielzahl entlang des Verteilgestänges verlaufender Förderleitungen viel Bauraum benötigen und entsprechend schwer sind. Mit einem derartigen Aufbau ist jedoch eine Bandapplikation bei Reihenkulturen, die in der Regel einen der üblichen Reihenabstände von 25cm, 50 cm oder 75 cm aufweisen, nicht möglich.

Es ist somit eine Aufgabe der Erfindung, eine verbesserte Technik für pneumatische Düngerstreuer bereitzustellen, mit der Nachteile herkömmlicher Techniken vermieden werden können. Es ist insbesondere eine Aufgabe der Erfindung, einen pneumatischen Düngerstreuer bereitzustellen, mit dem eine verbesserte pflanzenreihenbezogene Ausbringung von granularem Streugut realisiert werden kann.

Diese Aufgabe wird durch einen pneumatischen Düngerstreuer mit den Merkmalen des unabhängigen Anspruchs gelöst. Vorteilhafte Weiterbildungen sind in den abhängigen Ansprüchen und der Beschreibung angegeben.

Gemäß einem allgemeinen Gesichtspunkt der Erfindung wird ein pneumatischer Düngerstreuer bereitgestellt, der in an sich bekannter Weise ein Verteilgestänge zum Ausbringen von körnigem Streugut (Material), wie Dünger, Saatgut und/oder dergl., aufweist. Der Düngerstreuer kann somit nicht nur zur Ausbringung von Dünger auf eine landwirtschaftliche Fläche, sondern auch von anderem körnigen Material genutzt werden. Das Verteilgestänge umfasst zwei seitliche Ausleger, die jeweils eine Mehrzahl von Verteilleitungen, vorzugsweise Schlauchleitungen, und Verteilvorrichtungen zum Ausbringen des Streuguts (Materials) aufweisen. Hierbei ist das Streugut entlang der Verteilleitungen, die zumindest abschnittsweise am Verteilgestänge angeordnet sind, mittels eines Luftvolumenstroms in Richtung der Verteilvorrichtungen förderbar. Das Verteilgestänge erstreckt sich (in Arbeitsstellung) quer zu einer Fahrtrichtung des Düngerstreuers.

Die Verteilvorrichtungen weisen zum Ausbringen des Streuguts jeweils mindestens ein Ausbringelement zur Ausbildung eines Streufächers aus Streugut auf. Das Ausbringelement kann als Prallelement, z. B. als Prallteller, ausgeführt sein. Das Ausbringelement kann auch als ein Leitelement ausgeführt sein, das vorzugsweise einen gekrümmten Verlauf aufweist, so dass das auf das Leitelement pneumatisch geförderte Streugut durch den gekrümmten Verlauf entsprechend unter Ausbildung eines Streufächers ausgebracht wird.

Der pneumatischer Düngerstreuer zeichnet sich dadurch aus, dass die Verteilvorrichtungen jeweils zur Erzeugung einer veränderlichen Anzahl von Streufächern ausgebildet sind. Mit einer Verteilvorrichtung kann somit nicht nur genau ein Streufächer aus Streugut erzeugt werden, sondern eine anpassbare Anzahl von gleichzeitig durch eine Verteilvorrichtung erzeugten Streufächern. Dies bietet den Vorteil, dass das Streumuster des auszubringenden Verteilguts flexibler angepasst werden kann, insbesondere besser an eine reihenbezogene Ausbringung angepasst werden kann. Somit ist es möglich, dass gezielt Pflanzenreihen behandelt, z. B. gedüngt werden, oder alternativ gezielt Zwischenbereiche von Pflanzenreihen behandelt, z. B. gedüngt, werden.

Beispielsweise kann die wahlweise veränderliche Anzahl von Streufächern kleiner gleich 5 sein. In einer besonders bevorzugten Ausführungsform können die Verteilvorrichtungen jeweils zur wahlweisen Erzeugung von einem Streufächer und/oder von zwei Streufächern ausgebildet sein. Alternativ oder zusätzlich können die Verteilvorrichtungen jeweils zur wahlweisen Erzeugung von einem Streufächer, von zwei Streufächern und/oder von drei Streufächern ausgebildet sind. Diese veränderliche Anzahl von Streufächern ermöglicht einerseits ein ausreichend flexibles Anpassen des Streubildes für die üblichsten Pflanzenreihenmuster und ist andererseits hinsichtlich benötigtem Bauraum und Kostenaufwand vorteilhaft realisierbar.

Der Begriff "wahlweise" bedeutet, dass die Anzahl der Streufächer, die beim Ausbringvorgang jeweils durch eine bestimmte Verteilvorrichtung erzeugt werden, ausgewählt werden kann, z. B. eingestellt werden kann. Das Auswählen oder Einstellen der Anzahl an Streufächern kann durch eine entsprechende Konfiguration, z. B. eine manuelle Konfiguration und/oder eine automatisierte Ansteuerung der Verteilvorrichtungen erfolgen, was nachfolgend noch erläutert wird.

In diesem Dokument werden die Begriffe "Streufächer", "Streurichtung" und "Auftreffbereich" verwendet, die nachfolgend kurz erläutert werden.

Unter Streufächer wird ein fächerförmiges Streubild verstanden, das sich ergeben kann, wenn Streugut von einem Prallteller oder einem Leitelement abprallt und sich anschließend auf dem Weg zur landwirtschaftlichen Fläche fächerartig aufweitet. Bei dem Streufächer handelt es sich um einen dreidimensionalen Streufächer. Die dreidimensionale Ausdehnung des Streufächers setzt sich durch die flächige Ausdehnung des Streufächers und die im Streufächer enthaltene Düngermenge zusammen. Unter Streurichtung kann die in dem Streufächer liegende gemittelte Streurichtung des Streuguts eines Streufächers verstanden werden. Unter benachbarten Streufächern werden Streufächer verstanden, die in Längserstreckungsrichtung des Verteilgestänges nebeneinander /aufeinander folgend angeordnet sind. Der Auftreffbereich ist der Auftreffbereich des Streuguts auf der zu behandelnden landwirtschaftlichen Fläche.

In einer weiteren Ausführungsform sind die Verteilvorrichtungen jeweils ausgebildet, wahlweise benachbarte Streufächer mit unterschiedlichen Streurichtungen und/oder mit unterschiedlichen Auftreffbereichen, weiter vorzugsweise mit überlappfreien Auftreffbereichen, des Streuguts zu erzeugen. Dies ist besonders vorteilhaft für die Bandapplikation des Streuguts, da hierdurch Streugut durch die Verteilvorrichtungen jeweils auf benachbarte Pflanzenreihen ausgebracht werden kann, insbesondere auch mit pneumatischen Düngerstreuern, deren Verteilvorrichtungen herkömmlich beabstandet angeordnet sind, z. B. im Abstand von ca. 1, 5 Metern.

Die Verteilvorrichtungen weisen jeweils eine konfigurierbare und/oder ansteuerbare Aufteilvorrichtung auf, die zur Erzeugung einer veränderlichen Anzahl von Streugut-Teilströmen aus dem an der jeweiligen Verteilvorrichtung ankommenden Streugutstrom ausgebildet ist. Hiermit kann die veränderliche Anzahl von Streufächern an einer Verteilvorrichtung besonders vorteilhaft realisiert werden.

Die Verteilvorrichtungen weisen jeweils unterschiedliche Ausbringbereiche, nämlich unterschiedliche Prallflächen, zur Erzeugung unterschiedlicher Streufächer auf, wobei mittels der Aufteilvorrichtung veränderbar ist, zu welchen der Ausbringbereiche das eingangsseitig an der jeweiligen Verteilvorrichtung ankommende Streugut gefördert wird. Vorteilhaft wird eine kompakte Realisierung ermöglicht, um die veränderliche Anzahl von Streufächern zu erzeugen.

Hierbei kann die Aufteilvorrichtung für jeden der Ausbringbereiche eine eigene Zufuhrstrecke, vorzugsweise ein eigenes Zufuhrrohr, aufweisen. Ferner kann eingangsseitig der Zufuhrstrecke(n) eine Weiche, Klappen und/oder ein Öffnungs-Schließmechanismus angeordnet sein, womit einstellbar und/oder veränderbar ist, in welche der Zufuhrstrecke(n) das eingangsseitig an der jeweiligen Verteilvorrichtung ankommende Streugut gefördert wird. Entsprechend kann hierdurch eine flexible Steuerung und/oder Aufteilung des Streuguts zur Erzeugung der unterschiedlichen Streufächer realisiert werden.

In einer Ausführungsform sind die unterschiedlichen Ausbringbereiche einer Verteilvorrichtung durch unterschiedliche Ausbringelemente, vorzugsweise durch unterschiedliche Prallteller oder Leitelemente, ausgebildet, die benachbarte Streufächer mit unterschiedlicher Streurichtung erzeugen und vorzugsweise unterschiedlich orientiert am Verteilgestänge befestigt sind. Jede der Verteilvorrichtungen kann somit mehrere Prallteller oder Leitelemente aufweisen, die z. B. unterschiedlich ausgerichtet (orientiert) und/oder unterschiedlich ausrichtbar am Verteilgestänge angeordnet sind.

In einer hierzu alternativen Ausführungsform sind die unterschiedlichen Ausbringbereiche einer Verteilvorrichtung jeweils durch ein einziges Ausbringelement ausgebildet, welches winkelig zueinander angeordnete Auftreffflächen zur Ausbildung der unterschiedlichen Ausbringbereiche aufweist. Alternativ oder zusätzlich sind die unterschiedlichen Ausbringbereiche einer Verteilvorrichtung jeweils durch einen einzigen mehrteilig ausgeführten Prallteller ausgebildet, wobei die einzelnen Abschnitte des Pralltellers zur Ausbildung der unterschiedlichen Ausbringbereiche zueinander verstellbar ausgeführt sind. Die unterschiedlichen Ausbringbereiche können manuell zueinander verstellbar sein oder eine ansteuerbare Aktorik aufweisen und mittels der Aktorik automatisiert zueinander verstellbar sein.

Gemäß einer Ausführungsvariante hiervon kann das Ausbringelement mindestens einen Leitsteg zur Trennung der unterschiedlichen Ausbringbereiche und zur Führung des Streuguts innerhalb eines Auftreffbereichs aufweisen. Hierdurch kann auf konstruktiv kosteneffiziente Weise eine zuverlässige Aufteilung und Führung des Streuguts mittels lediglich eines Ausbringelements zur Erzeugung unterschiedlicher Streufächer realisiert werden.

In einer weiteren bevorzugten Ausführungsform umfasst der pneumatische Düngerstreuer eine Steuerungsvorrichtung, die eingerichtet ist, zur Veränderung des Streubildes, vorzugsweise zur Durchführung einer Bandapplikation, die Aufteilvorrichtung anzusteuern, um die Anzahl von Streugut-Teilströmen zu verändern. In einer Ausführungsvariante hiervon kann die Steuerungsvorrichtung ein Bedienterminal umfassen oder in Signalverbindung mit einem Bedienterminal stehen. Hierbei ist die Steuerungsvorrichtung eingerichtet, in Abhängigkeit von über das Bedienterminal eingegebenen oder hinterlegten Angaben zu Reihenabständen ein Steuersignal zu erzeugen, vorzugsweise zur Durchführung einer Bandapplikation und/oder zur Ansteuerung der Aufteilvorrichtung. Ein Vorteil hiervon ist, dass mittels einer Benutzereingabe die Funktion der Steuerungsvorrichtung entsprechend angepasst werden kann.

Alternativ oder zusätzlich kann die Steuerungsvorrichtung in Signalverbindung mit einer Erfassungseinrichtung stehen. Die Erfassungseinrichtung ist ausgebildet zur Erfassung einer Pflanzenreihe oder eines durch Pflanzenreihen gebildeten Pflanzenreihenrasters und/oder zur Erfassung einer Lage der Verteilvorrichtungen gegenüber einer Pflanzenreihe oder eines Pflanzenreihenrasters. Hierbei kann die Steuerungsvorrichtung eingerichtet sein, ihre Steuersignale in Abhängigkeit von den von der Erfassungseinrichtung erfassten Daten zu erzeugen, vorzugsweise zur Durchführung einer Bandapplikation und/oder zur Ansteuerung der Aufteilvorrichtung. Vorteilhaft können Pflanzenreihen oder ein Pflanzenreihenraster automatisch erfasst und die Steuerung des Verteilvorgangs entsprechend der Erfassung automatisiert angepasst werden. Die Erfassungseinrichtung kann eine oder mehrere Kameras umfassen, die z. B. am Verteilgestänge angeordnet sind und deren Blickwinkel auf die zu behandelnde landwirtschaftliche Fläche gerichtet ist.

In einer weiteren Ausführungsform können die Verteilvorrichtungen zur Veränderung von Auftreffbereichen der Streufächer, vorzugsweise zur Veränderung einer Breite und/oder Lage der Auftreffbereiche, konfigurierbar und/oder ansteuerbar sein. Gemäß dieser Ausführungsform sind die Verteilvorrichtungen somit einerseits jeweils zur Erzeugung einer veränderlichen Anzahl von Streufächern ausgebildet und zusätzlich können die Auftreffbereiche der Streufächer selbst verändert werden. Im Ergebnis kann somit eine besonders flexible Anpassung des Verteilbildes der einzelnen Verteilvorrichtungen erzielt werden, insbesondere um das Verteilbild bei Bedarf an eine gewünschte Bandapplikation anpassen zu können.

Gemäß einer weiteren Ausführungsform ist vorgesehen, dass die Steuerungsvorrichtung eingerichtet ist, in Abhängigkeit von über das Bedienterminal eingegebenen oder hinterlegten Angaben zu Reihenabständen und in Abhängigkeit von den von der Erfassungseinrichtung erfassten Daten, Steuersignale zur Veränderung einer Breite und/oder Lage der Auftreffbereiche zu erzeugen. Vorteilhaft kann eine gezielte Anpassung basierend auf den Reihenabständen eines zu behandelnden Pflanzenbestands ermöglicht werden.

In einer weiteren Ausführungsform kann zumindest ein Teil der Ausbringelemente jeweils mittels einer Schwenkvorrichtung verschwenkbar am Verteilgestänge angeordnet sein, zur Veränderung der Lage des Auftreffbereiches des Streufächers des Ausbringelements. Alternativ oder zusätzlich kann zumindest ein Teil der Ausbringelemente jeweils einen Prallteller oder ein Leitelement aufweisen, dessen Form mittels einer Aktorik veränderbar ist, zur Veränderung einer Breite des Auftreffbereiches des Streufächers des Ausbringelements. Mit diesen Varianten können die Streufächer, insbesondere deren Auftreffbereiche auf der landwirtschaftlichen Fläche, der entsprechenden Ausbringelemente gezielt beeinflusst werden. Hierdurch kann vorteilhaft eine Anpassung des Streubildes an beliebige Reihenabstände von Reihenkulturen ermöglicht werden.

Gemäß einer weiteren Ausführungsform umfasst der pneumatischer Düngerstreuer mindestens eine Dosiervorrichtung zur Dosierung des Streuguts in die Verteilleitungen, wobei die Dosierung des Streuguts in Abhängigkeit von der veränderlichen Anzahl von Streufächern anpassbar ist, vorzugsweise automatisiert anpassbar ist. Die Effizienz der verwendeten Verteilgutmenge kann hierdurch verbessert werden. Die mindestens eine Dosiervorrichtung kann im Bereich des Vorratsbehälters für Streugut oder im Bereich des Verteilgestänges angeordnet sein.

Gemäß einer weiteren bevorzugten Ausführungsform können die Verteilvorrichtungen jeweils über separate Dosiervorrichtungen mit Streugut versorgbar sein und jede der Verteilvorrichtungen kann über eine eigene Verteilleitung mit der ihr zugeordneten Dosiervorrichtung fluidisch in Verbindung stehen. Hierbei kann eine Menge an Streugut, das einer Verteilvorrichtung von der ihr zugeordneten Dosiervorrichtung zuführbar ist, manuell und/oder automatisiert anpassbar sein, vorzugsweise in Abhängigkeit einer Anzahl und/oder Breite der Streufächer der Verteilvorrichtung manuell und/oder automatisiert anpassbar sein. Mit anderen Worten kann jede Versorgungsleitung beispielsweise mit einer separaten Dosiervorrichtung mit dem jeweiligen Verteilgut versorgt werden. In Abhängigkeit der Anzahl an Streufächer und/oder in Abhängigkeit der Breite der Streufächer kann beispielsweise die Menge an mittels der Dosiervorrichtung dosiertem Verteilgut manuell und/oder automatisiert angepasst werden. Eine Verteilgutmenge kann hierdurch besonders effizient im Hinblick auf Bandapplikationsvorgänge angepasst werden.

In einer weiteren Ausführungsform können die Verteilvorrichtungen zur Veränderung der Anzahl von Streufächern manuell konfigurierbar sein, z. B. manuell einstellbar und/oder manuell durch einen Benutzer umrüstbar sein. Beispielsweise ist es möglich, dass die Anzahl der Ausbringelemente, z. B. die Anzahl der Prallteller, die jeweils an den Verteilvorrichtungen montiert sind, durch einen Benutzer entsprechend korrespondierend zu der Anzahl von Streufächern pro Verteilvorrichtung manuell angepasst wird. Hierfür können vorbestimmte Montagestellen für die Prallteller pro Verteilvorrichtung vorgesehen sein. Im Rahmen der manuellen Konfiguration kann dann die Anzahl der montierten Prallteller verändert werden. Gleichzeitig kann die Aufteilvorrichtung entsprechend umkonfiguriert werden.

Alternativ ist es möglich, dass das Ausbringelement durch einen Benutzer entsprechend der zur erzeugenden Anzahl von Streufächern umgebaut wird, beispielsweise durch Anpassung der jeweiligen Ausbringbereiche (Anpassung der unterschiedlichen Prallflächen). Gleichzeitig kann die Aufteilvorrichtung wieder entsprechend umkonfiguriert werden, z. B. indem der Öffnungs-Schließmechanismus, der den einzelnen Ausbringbereichen zugeordnet ist, entsprechend eingestellt wird.

Unter einer Verteilvorrichtung kann eine Baugruppe verstanden werden, die endseitig an einer Versorgungsleitung angeordnet und fluidisch angeschlossen ist und die ausgebildet ist, das eingangsseitig an der Verteilvorrichtung ankommende Streugut auf eine zu behandelnde landwirtschaftliche Fläche mittels mindestens eines Pralltellers und/oder Leitelements auszubringen. In einer weiteren Ausführungsform können die Verteilvorrichtungen jeweils lediglich nur an einer der zumindest abschnittsweise am Verteilgestänges angeordneten Verteilleitungen zur Versorgung mit Streugut angeschlossen sein.

Alternativ oder zusätzlich können benachbarte Verteilvorrichtungen - in Längserstreckungsrichtung (L) des Verteilgestänges gesehen - einen Abstand von mindestens 1 Meter, vorzugsweise von 1,5 Meter aufweisen. Alternativ oder zusätzlich können Anfangsbereiche der unterschiedlichen Streufächer, die von der gleichen Verteilvorrichtung erzeugbar sind, - in Längserstreckungsrichtung (L) des Verteilgestänges gesehen -, einen Abstand von ≤ 50 cm aufweisen. Alternativ oder zusätzlich weisen die Verteilvorrichtungen jeweils eine Längenabmessung und/oder Baugröße auf, - in Längserstreckungsrichtung (L) des Verteilgestänges gesehen -, die ≤ 50 cm beträgt.

In einer weiteren Ausführungsform kann das Verteilgestänge zur Einstellung seiner Höhenlage gegenüber einer zu bearbeitenden landwirtschaftlichen Fläche, insbesondere einem Pflanzenbestand, höhenverstellbar an einem Trägerfahrzeug gehaltert sein, beispielsweise mittels eines höhenverstellbaren Hubrahmens, der z. B. durch ein Parallelogrammgestänge höhenverstellbar ist.

In einer weiteren Ausführungsform kann das Verteilgestänge einen Träger und ein Mittelteil aufweisen, wobei an dem Mittelteil die zwei seitlichen Ausleger schwenkbar angebracht sind. Das Verteilgestänge kann eine hohe Arbeitsbreite aufweisen, die wesentlich größer als eine Breite eines Trägerfahrzeugs des Düngerstreuers ist, an dem das Verteilgestänge gehaltert ist. Die Arbeitsbreite kann z. B. ein Vielfaches der Breite des Trägerfahrzeugs sein. Die Arbeitsbreite des Verteilergestänges, d. h. die Breite in Arbeitsposition oder im vollständig ausgeklappten Zustand, kann mindestens 15 Meter sein, vorzugsweise mindestens 20 Meter sein. Die Ausleger können ein- und ausklappbar ausgeführt sein, so dass diese für Transportfahrten gefaltet und eingeklappt werden können.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine schematische Perspektivansicht eines pneumatischen Düngerstreuers gemäß einer Ausführungsform der Erfindung;
- Figur 1B: eine schematische Hinteransicht des Düngerstreuers aus Figur 1A;
- Figur 2A: eine schematische Teilansicht eines Auslegers in einem ersten Bandapplikations-Streubetrieb gemäß einer Ausführungsform der Erfindung;
- Figur 2B: eine schematische Teilansicht eines Auslegers in einem zweiten Bandapplikations-Streubetrieb gemäß einer Ausführungsform der Erfindung;
- Figur 3A: eine schematische Teilansicht eines Auslegers in einem dritten Bandapplikations-Streubetrieb gemäß einer Ausführungsform der Erfindung;
- Figur 3B: eine schematische Teilansicht eines Auslegers in einem vierten Bandapplikations-Streubetrieb gemäß einer Ausführungsform der Erfindung;
- Figur 4A: eine schematische Teilansicht eines Auslegers in dem ersten Bandapplikations-Streubetrieb gemäß einer Ausführungsform der Erfindung;
- Figur 4B: eine schematische Teilansicht eines Auslegers in einem fünften Bandapplikations-Streubetrieb gemäß einer Ausführungsform der Erfindung;
- Figur 5A: eine schematische Teilansicht eines Auslegers in dem zweiten Bandapplikations-Streubetrieb gemäß einer Ausführungsform der Erfindung;
- Figur 5B: eine schematische Teilansicht eines Auslegers in einem sechsten Bandapplikations-Streubetrieb gemäß einer Ausführungsform der Erfindung;
- Figur 6: eine schematische Darstellung einer Verteilvorrichtung gemäß einer Ausführungsform der Erfindung;
- Figur 7: eine schematische Darstellung einer Verteilvorrichtung gemäß einer weiteren Ausführungsform der Erfindung;
- Figur 8: eine schematische Darstellung einer Verteilvorrichtung gemäß einer weiteren Ausführungsform der Erfindung;
- Figur 9: eine schematische Darstellung einer Verteilvorrichtung gemäß einer weiteren Ausführungsform der Erfindung; und
- Figur 10: ein schematisches Blockdiagramm eines Kommunikationssystems des Düngerstreuers aus Figur 1A.

Gleiche oder funktional äquivalente Elemente sind in den Figuren zum Teil mit denselben Bezugszeichen bezeichnet und zum Teil nicht gesondert beschrieben. Ferner sind zur besseren Übersichtlichkeit nicht immer alle gleichen Bauteile mit Bezugszeichen versehen, so dass zum Teil nur ein Teil der Verteilvorrichtungen, der Verteilleitungen, Ausbringelemente bzw. der Prallteller, etc. mit Bezugszeichen gekennzeichnet ist.

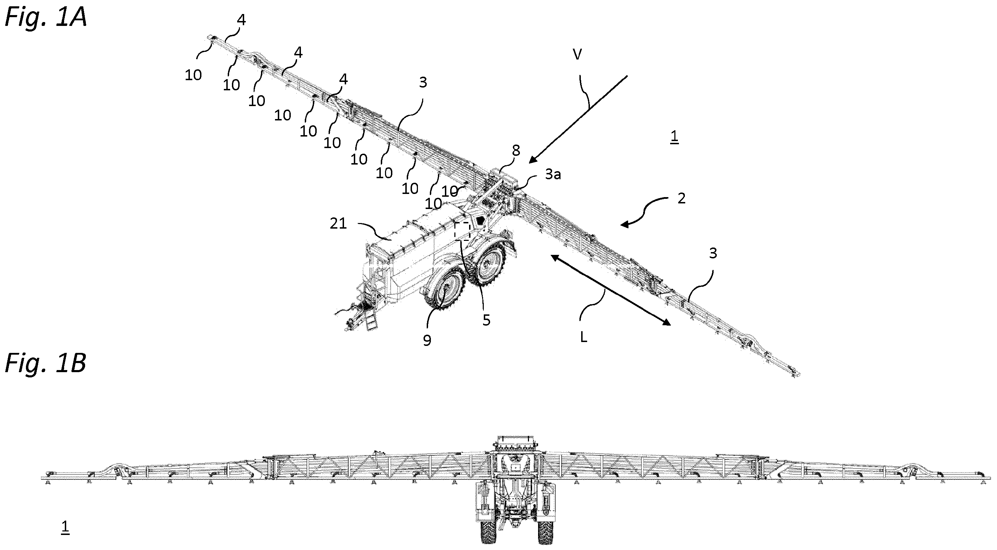

Figur 1A zeigt eine schematische Perspektivansicht und Figur 1b eine Hinteransicht eines pneumatischen Düngerstreuers gemäß einer Ausführungsform der Erfindung.

Figur 1A zeigt eine schematische Perspektivansicht eines pneumatischen Düngerstreuers 1 zum Ausbringen von körnigem landwirtschaftlichen Streugut gemäß einer Ausführungsform der Erfindung. Die Fahrtrichtung ist mit dem Pfeil V gekennzeichnet. Beim Düngerstreuer 1 handelt es sich insbesondere um einen Düngerstreuer, mittels welchem körnige bzw. granulare landwirtschaftliche Streugüter bzw. Verteilgüter, wie bspw. Dünger oder Mikrogranulate, aber auch Saatgüter, ausgebracht werden können. Beispielhaft ist der Düngerstreuer 1 als gezogener Düngerstreuer ausgeführt, d. h. als ein mittels eines Zugfahrzeugs koppelbarer bzw. gezogener landwirtschaftlicher Düngerstreuer 1 ausgebildet. Am vorderen Ende weist der Düngerstreuer hierzu eine Verbindungseinrichtung, z. B. eine Zugöse, auf. Der Düngerstreuer 1 könnte aber auch ein selbstfahrender und/oder ein an einem Zugfahrzeug anbaubarer bzw. angebauter Düngerstreuer 1 sein. Das Trägerfahrzeug umfasst eine Rahmenkonstruktion, ein vier Laufräder umfassendes Fahrwerk, sowie einen Vorratsbehälter 21 zum Mitführen und/oder Bereitstellen des Streuguts. Dabei kann der Vorratsbehälter 21 in Abhängigkeit der Anzahl an verschiedenen Streugüter eine oder mehrere Kammern aufweisen.

Der Düngerstreuer weist ein an einem Trägerfahrzeug 9 mittelbar oder unmittelbar gehaltertes Verteilgestänge 2 zum Ausbringen von körnigem Streugut auf. Das Verteilgestänge 2 umfasst zwei seitliche Ausleger 3, die an ihrem inneren Ende schwenkbar an einem Mittelteil 3a befestigt sind und ein äußeres freies Ende aufweisen. Das Verteilgestänge 2 kann hierbei bspw. Arbeitsbreiten von mehr als 20 Metern aufweisen. Das Verteilgestänge 2 bzw. die Ausleger 3 können zumindest abschnittsweise durch eine fachwerkartige Gestängestruktur bzw. durch eine Fachwerkkonstruktion gebildet sein. Darüber hinaus weist die Gestängestruktur bzw. die Fachwerkkonstruktion eine größere Höhe als Tiefe auf.

An den Auslegern 3 sind jeweils eine Mehrzahl von Verteilleitungen 4, z. B. ausgeführt als Schlauchleitungen, und Verteilvorrichtungen 10 zum Ausbringen des Streuguts angebracht. Hierbei wird das Streugut im Streubetrieb entlang der Verteilleitungen 4, die zumindest abschnittsweise am Verteilgestänge 2 angeordnet sind, mittels eines Luftvolumenstroms in Richtung der Verteilvorrichtungen 10 gefördert. Am Mittelteil 3a ist eine Dosiervorrichtung 8 angeordnet, die ausgebildet ist, das Streugut aus dem Vorratsbehälter 21 über die Dosiervorrichtung 8 in der gewünschten Menge in die einzelnen Verteilleitungen 4 zu dosieren. Der Vorratsbehälter 21, die Dosiervorrichtung 8, sowie das Streugut-Fördersystem zwischen Vorratsbehälter und Dosiervorrichtung 8 kann in an sich bekannter Weise ausgeführt sein und wird daher vorliegend nicht näher beschrieben. Lediglich beispielhaft können diese Komponenten ausgeführt sein, wie es in der Offenlegungsschrift DE 10 2018 131 070 A1 beschrieben ist.

Die Verteilvorrichtungen 10 weisen zum Ausbringen des Streuguts jeweils mindestens ein Ausbringelement, vorzugsweise einen Prallteller oder ein Leitelement, zur Ausbildung eines Streufächers aus körnigem Streugut auf, was nachfolgend noch näher beschrieben ist. Die Verteilvorrichtungen sind vorliegend, lediglich beispielhaft, in Längserstreckungsrichtung L des Verteilgestänges gesehen, 1,5 Meter voneinander beabstandet. Die Längserstreckungsrichtung bzw. die Gestängeachse des Verteilgestänges 2 ist hier mit dem Pfeil L gekennzeichnet.

Die Verteilvorrichtungen 10 des Düngerstreuers 1 weisen die Besonderheit auf, dass sie jeweils zur Erzeugung einer veränderlichen Anzahl von Streufächern ausgebildet sind, was anhand der nachfolgenden Figuren beschrieben wird.

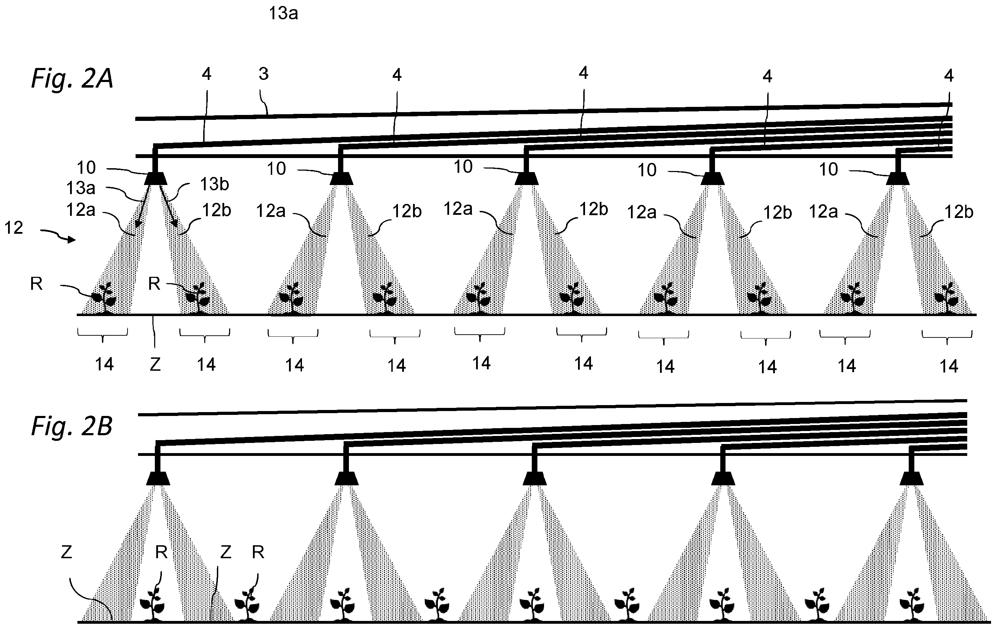

Figur 2A zeigt eine schematische Teilansicht eines Auslegers in einem ersten Bandapplikations-Streubetrieb gemäß einer Ausführungsform der Erfindung. Unter einer Bandapplikation bzw. einem Bandapplikations-Streubetrieb wird hier eine reihenbezogene Ausbringung von Streugut entlang von Ausbringstreifen verstanden im Unterschied zur ganzflächigen Applikation von Streugut. Die Ausbringstreifen können entlang von Pflanzenreihen R oder, z. B. zur Unkrautbekämpfung, auch zwischen Pflanzenreihen verlaufen, d. h. entlang von Zwischenbereichen Z. Figur 2A illustriert eine Bandapplikation, bei der die Ausbringstreifen entlang von Pflanzenreihen R verlaufen.

Die Verteilvorrichtungen 10 des Düngerstreuers 1 können für die Durchführung dieses ersten Bandapplikations-Streubetriebs so konfiguriert werden, dass jede Verteilvorrichtung 10 im Streubetrieb zwei benachbarte Streufächer 12, hier die Streufächer 12a und 12b, mit unterschiedlichen Streurichtungen 13a, 13b und unterschiedlichen überlappfreien Auftreffbereichen 14 des Streuguts erzeugen kann. Mittels der Streufächer 12a und 12b wird Streugut auf benachbarte Pflanzenreihen R aufgebracht, unter Aussparung des Zwischenbereichs Z der Pflanzenreihen. Obwohl die einzelnen Verteilvorrichtungen beispielsweise entlang des Gestänges 1,5 Meter voneinander beabstandet sind, ist hierdurch dennoch eine Bandapplikation auf Pflanzenreihenstrukturen möglich, deren Reihenabstand kleiner ist als der Abstand der Verteilvorrichtungen 10 voneinander.

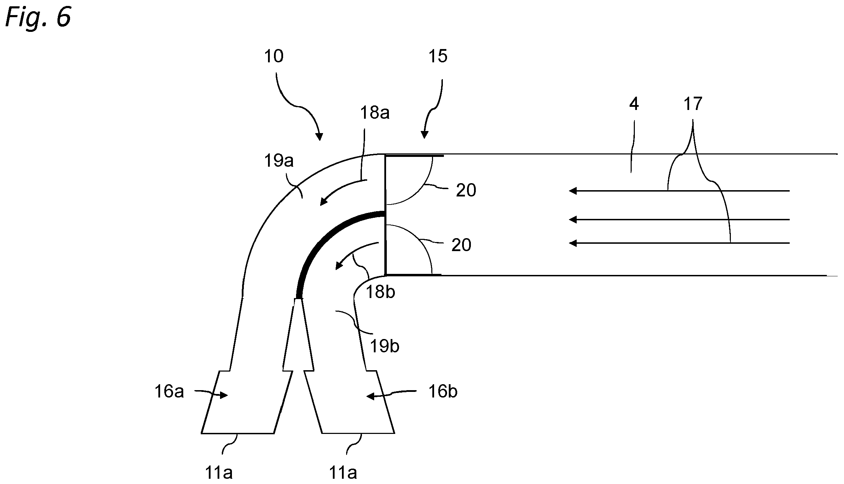

In Figur 2A ist ebenfalls gezeigt, dass die Verteilvorrichtungen 10 jeweils nur an einer der Verteilleitungen 4 zur Versorgung mit Streugut angeschlossen sind. Wie der über die zugeordnete Verteilleitung 4 geförderte und an einer Verteilvorrichtung 10 ankommende Streugut-Strom zur Erzeugung der mehreren Streugutfächer 12a, 12b aufgeteilt wird, wird nachfolgend noch anhand der Figuren 6 bis 9 beispielhaft erläutert.

Figur 2B zeigt eine schematische Teilansicht eines Auslegers in einem zweiten Bandapplikations-Streubetrieb gemäß einer Ausführungsform der Erfindung. Die Verteilvorrichtungen 10 des Düngerstreuers 1 erzeugen für die Durchführung dieses zweiten Bandapplikations-Streubetriebs im Streubetrieb wiederum zwei benachbarte Streufächer 12a und 12b mit unterschiedlichen Streurichtungen 13a, 13b und unterschiedlichen überlappfreien Auftreffbereichen 14 des Streuguts, wobei nun mittels der Streufächer 12a, 12b das Streugut auf benachbarte Zwischenbereiche Z von Pflanzenreihen aufgebracht wird, unter Aussparung der Pflanzenreihen R. Dies kann beispielsweise durch dieselbe Konfiguration der Verteilvorrichtungen 10 wie im ersten Bandapplikations-Streubetrieb erreicht werden, wobei jedoch das Verteilgestänge im Unterschied hierzu quer zu den Pflanzenreihen R um einen halben Reihenabstand versetzt positioniert wird. Alternativ hierzu können auch die Strahlrichtungen 13a, 13b der Streufächer verändert werden, indem eine Schwenkstellung der Prallteller, die zur Erzeugung der Streufächer verwendet werden, verändert wird. Hierzu können die Prallteller verschwenkbar am Verteilgestänge angeordnet sein.

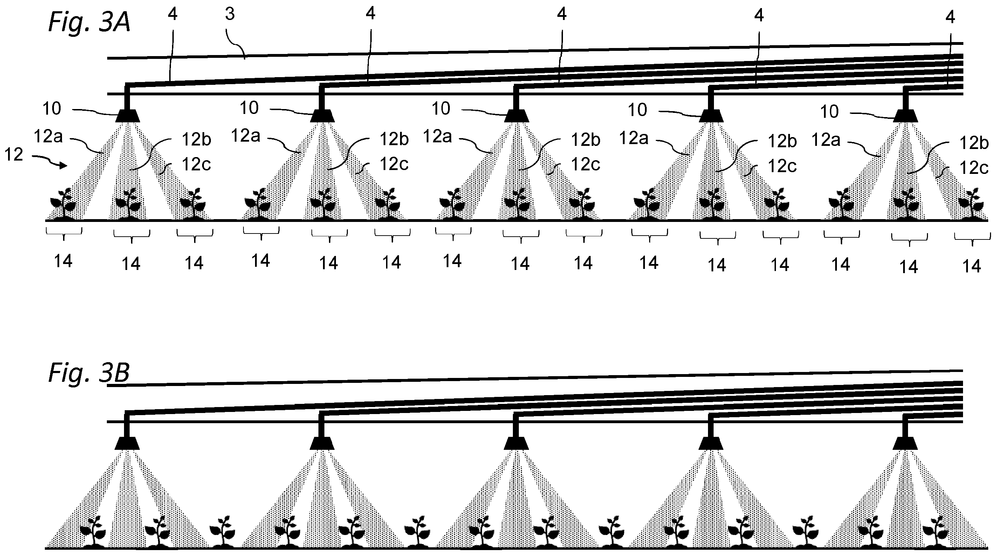

Ein besonderer Vorzug des Düngerstreuers 1 ist jedoch, dass die Verteilvorrichtungen 10 jeweils zur Erzeugung einer veränderlichen Anzahl von Streufächern 12a, 12b, 12c ausgebildet sind, d. h. die Anzahl von gleichzeitig erzeugten Streufächern, die von jeder Verteilvorrichtung 10 im Streubetrieb erzeugt wird, kann angepasst werden. Dies ist beispielhaft anhand der Figur 3A illustriert, die eine schematische Teilansicht eines Auslegers in einem dritten Bandapplikations-Streubetrieb zeigt.

Im Vergleich zu der Bandapplikation der Figuren 2A und 2B können die Verteilvorrichtungen 3 auch so konfiguriert werden, dass diese im Streubetrieb jeweils drei unterschiedliche Streufächer 12a, 12b, 12c mit unterschiedlichen Streurichtungen und unterschiedlichen überlappfreien Auftreffbereichen 14 des Streuguts erzeugen. Dies ist z. B. vorteilhaft für eine Bandapplikation für Reihenabstände der Pflanzenreihen R, die kleiner sind als die Reihenabstände wie in den Figuren 2A und 2B gezeigt.

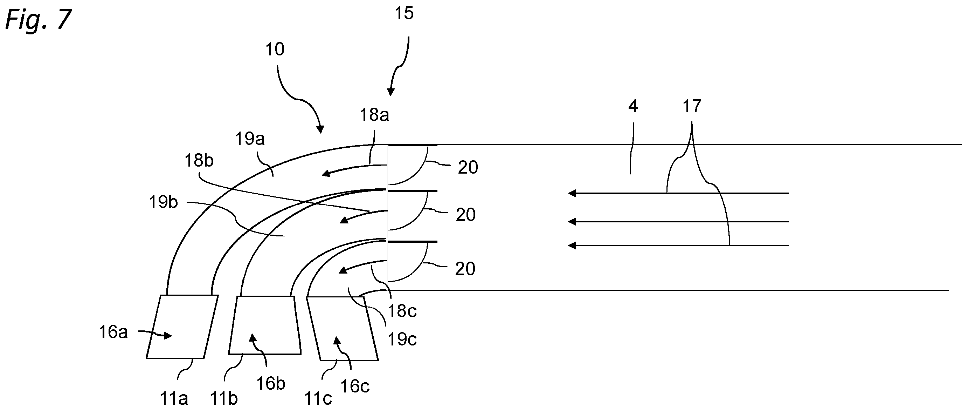

Im dritten Bandapplikations-Streubetrieb sind die erzeugten Streufächer auf die Pflanzenreihen R gerichtet, unter Aussparung der Zwischenbereiche. Dagegen zeigt die Figur 3B einen vierten Bandapplikations-Streubetrieb, der sich vom dritten Bandapplikations-Streubetrieb lediglich dadurch unterscheidet, dass die erzeugten Streufächer auf die Zwischenbereiche Z gerichtet, unter Aussparung der Pflanzenreihen R (analog zum zweiten Bandapplikations-Streubetrieb der Figur 2B). Die Verteilvorrichtungen 10 können zur Erzeugung der Streufächer in den Figuren 2A bis 3B beispielsweise gemäß der Ausführungsform der Figur 7 ausgeführt sein, die nachfolgend noch beschrieben wird. Mittels dieser Ausführungsform können beispielsweise wahlweise ein, zwei oder drei Streufächer pro Verteilvorrichtung 10 erzeugt werden.

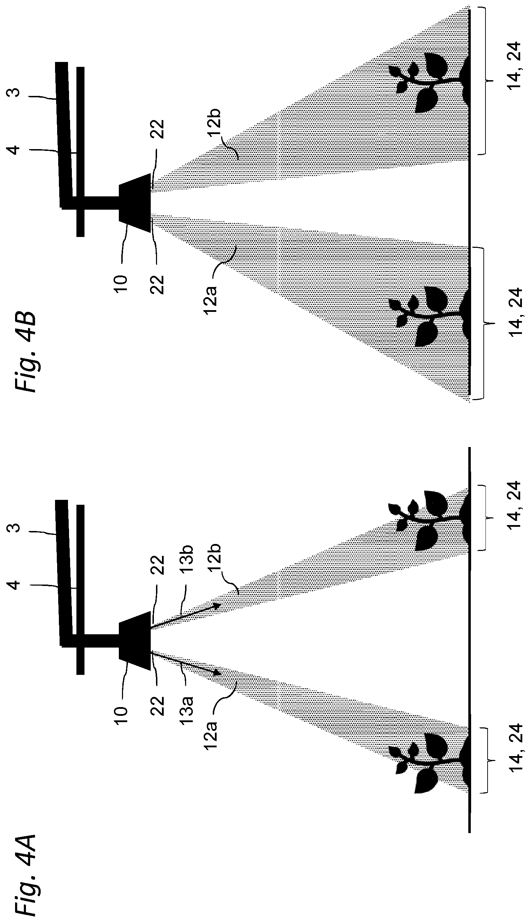

Neben der Möglichkeit, die Anzahl der gleichzeitig erzeugten Streufächer pro Verteilvorrichtung zu verändern, kann optional ferner die Möglichkeit bestehen, dass das Streubild eines einzelnen Streufächers, insbesondere dessen Breite und/oder Strahlrichtung, angepasst werden kann. Dies ist beispielhaft anhand der Figuren 4A bis 5B illustriert.

Figur 4A zeigt zunächst eine schematische Teilansicht eines Auslegers in dem ersten Bandapplikations-Streubetrieb, wie bereits in Figur 2A beschrieben. Im Vergleich hierzu zeigt Figur 4B einen fünften Bandapplikations-Streubetrieb, der sich von dem in Figur 4A dadurch unterscheidet, dass die Streufächer 12a, 12b und damit die erzeugte Streubreite 24 verbreitert sind. Bei dem Bandapplikations-Betrieb der Figuren 4A und 4B sind die Streufächer auf die Pflanzenreihen R gerichtet.

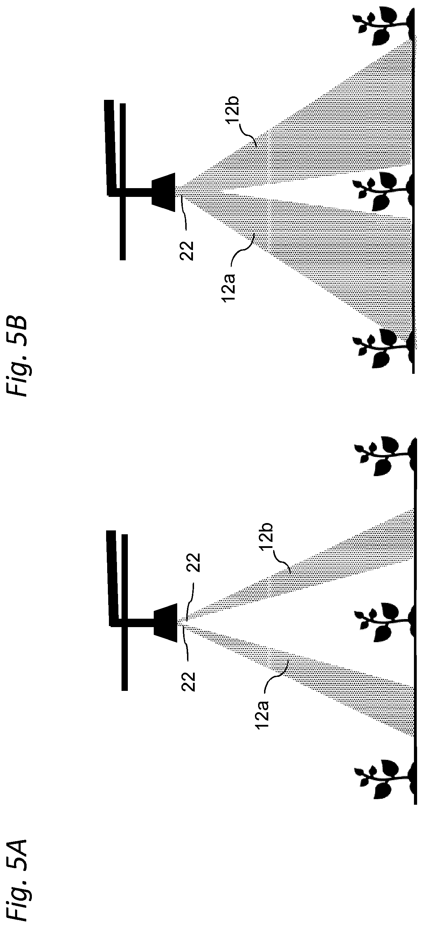

Die Figuren 5A und 5B zeigen zu den Figuren 4A und 4B korrespondierende Streubetriebe mit dem Unterschied, dass die Streufächer nun auf die Zwischenbereiche Z zwischen den Pflanzenreihen gerichtet sind. Ein weiterer Unterschied ist, dass die Anfangsbereiche 22 der unterschiedlichen Streufächer 12a, 12b in den Figuren 5A und 5B überlappen, weil diese durch unterschiedliche Prallflächen des gleichen Pralltellers erzeugt werden, während die Streufächer 12a, 12b in den Figuren 4A und 4B durch unterschiedliche Prallteller erzeugt werden (vgl. Figur 6).

Wie der über die zugeordnete Verteilleitung 4 geförderte und an einer Verteilvorrichtung 10 ankommende Streugut-Strom zur Erzeugung der mehreren Streufächer 12a, 12b aufgeteilt wird, wird nachfolgend beispielhaft erläutert.

Figur 6 zeigt eine stark schematisierte Darstellung einer Verteilvorrichtung 10 gemäß einer Ausführungsform der Erfindung. Die Verteilvorrichtungen 10 weisen im gezeigten Ausführungsbeispiel zwei benachbart zueinander angeordnete Prallteller 11a, 11b auf, die jeweils unterschiedliche Ausbringbereiche zur Erzeugung unterschiedlicher Streufächer ausbilden. Die Prallteller 11a, 11b sind unterschiedlich orientiert am Verteilgestänge 2 befestigt.

Diese Ausbringbereiche sind hier die Ausbringbereiche 16a und 16b zur Erzeugung der Streufächer 12a, 12b (letztere sind nicht dargestellt). Die Ausbringbereiche 16a und 16b werden durch die Prallflächen der Prallteller ausgebildet.

Die Verteilvorrichtungen 10 weisen ferner jeweils eine konfigurierbare und/oder ansteuerbare Aufteilvorrichtung 15 auf. Die Aufteilvorrichtung 15 ist zur Erzeugung einer veränderlichen Anzahl von Streugut-Teilströmen 18, hier die Teilströme 18a und 18b, aus dem an der jeweiligen Verteilvorrichtung über die zugeordnete Verteilleitung 4 ankommenden Streugutstrom 17 ausgebildet. Mittels der Aufteilvorrichtung 15 ist veränderbar, zu welchen der Ausbringbereiche 16a, 16b das eingangsseitig an der jeweiligen Verteilvorrichtung 10 ankommende Streugut gefördert wird. Hierzu weist die Aufteilvorrichtung 15 für jeden der Ausbringbereiche eine eigene Zufuhrstrecke 19a, 19b auf, vorzugsweise ein eigenes Zufuhrrohr auf.

Eingangsseitig der Zufuhrstrecken 19a, 19b ist jeweils eine Weiche, Klappe und/oder ein Öffnungs-Schließmechanismus 20 angeordnet, womit einstellbar und/oder veränderbar ist, in welche der Zufuhrstrecke(n) 19a, 19b das eingangsseitig an der jeweiligen Verteilvorrichtung 10 ankommende Streugut gefördert wird. In Figur 6 sind beispielhaft betätigbare (schwenkbare) Klappen 20 gezeigt, die in eine Öffnungstellung bringbar sind, in der das an der Klappe ankommende Streugut in die nachfolgende Zufuhrstrecke 19a oder 19b gelangen kann und die in eine Schließstellung bringbar sind, in der das an der Klappe ankommende Streugut nicht in die nachfolgende Zufuhrstrecke 19a oder 19b gelangen kann. Eingangsseitig zu jeder der Zufuhrstrecken 19a, 19b ist jeweils ein Klappe 20 angeordnet. Die Klappen 20 sind unabhängig voneinander betätigbar.

Je nachdem, wie die Öffnungsstellung oder die Schließstellung der Klappen 20 eingestellt ist, können somit wahlweise kein Streufächer (beide Klappen in Schließstellung, ein Streufächer (nur eine Klappe offen) oder zwei Streufächer (beide Klappen geöffnet) erzeugt werden.

Sind beispielsweise beide Klappen jeder Verteilvorrichtung 10 geöffnet, wird der eingangsseitig an der jeweiligen Verteilvorrichtung 10 ankommende Streugutstrom in zwei Streugutteilströme 18a, 18b aufgeteilt, die jeweils entlang einer der Zufuhrstrecken 19a, 19b auf die Prallteller 11a, 11b mittels des Luftvolumenstroms gefördert werden und dort unter Ausbildung der beiden Streufächer 12a, 12b abprallen. Falls nur eine der Klappen geöffnet ist, kann ferner durch Auswahl, welche der beiden Klappen geöffnet wird, die Strahlrichtung des erzeugten Streufächers angepasst werden.

Es ist möglich, dass die Aufteilvorrichtung 15 manuell konfigurierbar ist, z. B. indem die Klappen manuell durch einen Benutzer entweder in die Öffnungsstellung oder die Schließstellung gebracht werden können. Hierzu können die Klappen ein entsprechendes Betätigungselement, z. B. einen Verstellhebel aufweisen, um die Klappenstellung zu verändern. Ferner kann eine Arretierung vorgesehen sein, um die Klappen und/oder den Bedienhebel in der jeweiligen Stellung arretieren zu können.

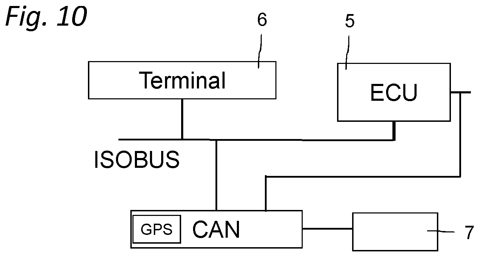

Alternativ ist es gemäß einer weiteren Ausführungsvariante (nicht dargestellt) möglich, dass die Aufteilvorrichtung ansteuerbar ist, um deren Konfiguration zu verändern. Hierzu können z. B. die Klappen mittels einer ansteuerbaren Aktorik wahlweise in die Öffnungsstellung oder die Schließstellung gebracht werden. Die Aktorik für jede Klappe kann hierzu z. B. einen elektrisch, hydraulisch oder pneumatisch betätigbaren Stellzylinder aufweisen, der von einer Steuerungsvorrichtung 5 (vgl. auch Figur 10) angesteuert werden kann. Der Betrieb der Steuerungsvorrichtung kann z. B. von einem Benutzer über ein Bedienterminal 6 (vgl. auch Figur 10) gesteuert werden.

Gemäß dem in Figur 6 gezeigten Ausführungsbeispiel können somit wahlweise ein oder zwei Streufächer 12 gleichzeitig erzeugt werden.

Ferner ist es möglich, dass die Prallteller eine zugeordnete Aktorik aufweisen, mittels derer eine Form des Pralltellers, insbesondere die Form der Prallfläche, veränderbar ist, um auf diese Weise eine Breite des Auftreffbereiches des Streufächers des Pralltellers zu verändern. Alternativ oder zusätzlich könnten die Prallteller oder zumindest ein Teil hiervon, jeweils mittels einer Schwenkvorrichtung verschwenkbar am Verteilgestänge 2 angeordnet sein, zur Veränderung der Lage des Auftreffbereiches 14 des jeweiligen Pralltellers.

Alternativ zur der Verwendung zweier Prallteller 11a und 11b zur Erzeugung der Streufächer 12a und 12b ist es jedoch in einer alternativen Ausführungsform vorgesehen, dass die unterschiedlichen Ausbringbereiche (die unterschiedlichen Prallflächen) durch einen einzigen Prallteller ausgebildet sind, welcher winkelig zueinander angeordnete Auftreffflächen zur Ausbildung der unterschiedlichen Ausbringbereiche aufweist. Es ist auch möglich, dass der Prallteller, als mehrteilig ausgeführter Prallteller ausgebildet ist, wobei die einzelnen Abschnitte des Pralltellers zur Ausbildung der unterschiedlichen Ausbringbereiche zueinander verstellbar ausgeführt sind. Hiermit können z. B. die in den Figuren 5a und 5B gezeigten Streubilder erzeugt werden. Es ist vorteilhaft, hierbei mittels eines Leitstegs die unterschiedlichen Prallflächen zu trennen, so dass das Streugut mittels des Leitstegs besser innerhalb einer Prallfläche geführt werden kann.

Figur 7 zeigt dagegen eine weitere Ausführungsform, mittels der wahlweise ein, zwei oder drei Streufächer 12 gleichzeitig erzeugt werden können. Diese Ausführungsform unterscheidet sich von der in Figur 6 gezeigten lediglich dadurch, dass hier drei Prallteller 11a, 11b, 11c pro Verteilvorrichtung 10 vorgesehen sind, die drei unterschiedliche Ausbringbereiche (Prallflächen) 16a, 16b, 16c ausbilden, dass drei Zufuhrstrecken 19a, 19b, 19c und drei Klappen 20 vorgesehen sind. Ansonsten gilt das zuvor für die Ausführungsform der Figur 6 Gesagte analog ebenfalls für die Ausführungsform der Figur 7.

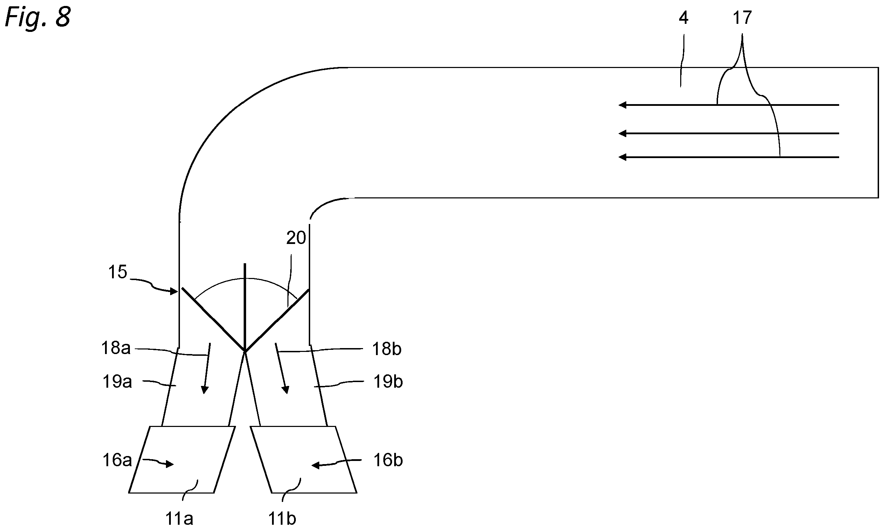

Figur 8 zeigt eine stark schematisierte Darstellung einer weiteren Ausführungsform einer Verteilvorrichtung 10, die eine Abwandlung der Ausführungsform der Figur 6 darstellt. Wie auch bei dem Ausführungsbeispiel der Figur 6 können wahlweise ein oder zwei Streufächer 12 gleichzeitig erzeugt werden. Diese Ausführungsform unterscheidet sich von der Ausführungsform der Figur 6 im Wesentlichen nur durch die Ausführung der Aufteilvorrichtung 15, insbesondere des Öffnungs-Schließmechanismus 20. Der Öffnungs-Schließmechanismus ist hier durch eine verstellbare Weiche 20 ausgebildet, deren festes Ende verschwenkbar am Gabelungspunkt der beiden Zufuhrstrecken 19a, 19b angeordnet ist und deren freies Ende in Figur 8 von links nach rechts und umgekehrt verschwenkbar ist. Die Weiche 20 ist somit in eine erste Endstellung bringbar, in der die Zufuhrstrecke 19a verschlossen ist, in eine Mittenstellung bringbar, in der beiden Zufuhrstrecken 19a, 19b geöffnet sind und in eine Endstellung bringbar, in der die Zufuhrstrecke 19b verschlossen ist.

Je nachdem, wie die Stellung der Weiche 20 eingestellt ist, können somit wahlweise zwei Streufächer (Weiche in Mittenstellung), oder nur ein Streufächer (Weiche in erster oder zweiter Endstellung) erzeugt werden. Ferner kann bei Erzeugung nur eines Streufächers wahlweise dessen Richtung und Auftreffbereich verändert werden, je nachdem, ob die Klappe in die erste oder zweite Endstellung gebracht wird.

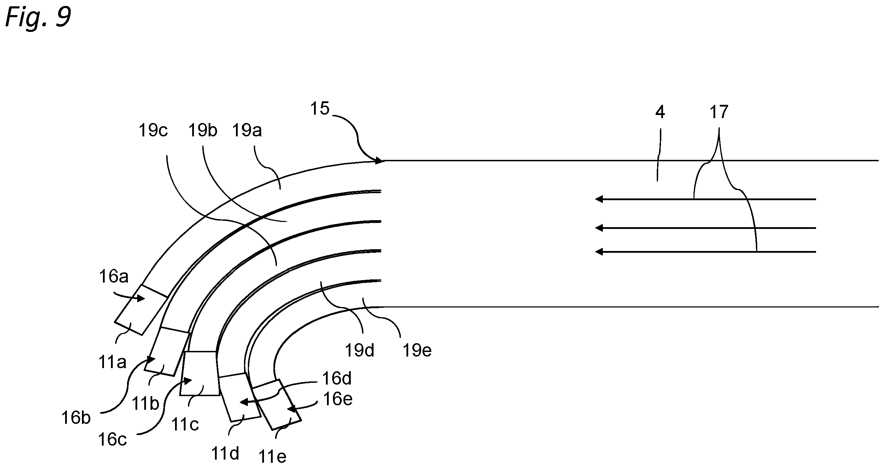

Figur 9 zeigt eine stark schematisierte Darstellung einer weiteren Ausführungsform, mittels der wahlweise ein, zwei, drei, vier oder fünf Streufächer 12 gleichzeitig erzeugt werden können. Diese Ausführungsform unterscheidet sich von der in Figur 6 gezeigten lediglich dadurch, dass hier fünf Prallteller 11a, 11b, 11c, 11d, 11e pro Verteilvorrichtung 10 (anstelle von zwei) vorgesehen sind, die fünf unterschiedliche Ausbringbereiche (Prallflächen) 16a, 16b, 16c, 16d, 16e ausbilden, dass die Verteilleitung 4 sich in fünf getrennte Zufuhrstrecken 19a, 19b, 19c, 19d, 19e verzweigt und dass die Aufteilvorrichtung 15 fünf Klappen umfasst (nicht eingezeichnet), die eingangsseitig zu den Zufuhrstrecken 19a, 19b, 19c, 19d, 19e angeordnet sind. Ansonsten gilt das zuvor für die Ausführungsform der Figur 6 Gesagte analog ebenfalls für die Ausführungsform der Figur 9.

Figur 10 zeigt ein schematisches Blockdiagramm eines Kommunikationssystems des Düngerstreuers 1 aus Figur 1A. Das Kommunikationssystem kann in an sich bekannter Weise einen Datenbus aufweisen, z. B. einen CAN-Datenbus und/oder eine als ISOBUS ausgebildeten Datenbus. Anstelle eines Datenbus können die Komponenten über ein Ethernet-Datennetz miteinander in Kommunikationsverbindung stehen. Eine Steuerungsvorrichtung 5, z. B. ein Steuergerät, ein Bedienterminal 6 (in Figur 1C als Terminal bezeichnet, z. B. ein ISOBUS-Terminal) sowie eine Erfassungseinrichtung 7 zur Erfassung von Pflanzenreihen oder eines Pflanzenreihenrasters stehen über entsprechende Datenschnittstellen in Signalverbindung mit dem Kommunikationssystem. Das Bedienterminal kann auch ein Bedienterminal der Zugmaschine sein, falls es sich z. B. bei dem Düngerstreuer um einen gezogenen Düngerstreuer handelt.

Insbesondere für den Fall, dass die Aufteilvorrichtung 15 automatisiert mittels einer entsprechenden Aktorik, wie vorstehend beschrieben, ansteuerbar ist, kann die Steuerungsvorrichtung 5 eingerichtet sein, zur Veränderung des Streubildes, vorzugsweise zur Durchführung einer Bandapplikation, die Aufteilvorrichtung 15 anzusteuern, um die Anzahl von Streugut-Teilströmen zu verändern.

Hierbei kann die Steuerungsvorrichtung 5 in Signalverbindung mit dem Bedienterminal 6 stehen und eingerichtet sein, in Abhängigkeit von über das Bedienterminal 6 eingegebenen oder hinterlegten Angaben zu Reihenabständen ein Steuersignal zu erzeugen, vorzugsweise zur Durchführung einer Bandapplikation und zur Ansteuerung der Aufteilvorrichtung.

Hierbei ist es optional ferner möglich, dass die Steuerungsvorrichtung 5 in Signalverbindung steht mit einer Erfassungseinrichtung 7 zur Erfassung einer Pflanzenreihe oder eines durch Pflanzenreihen gebildeten Pflanzenreihenrasters. Die Erfassungseinrichtung 7 kann beispielsweise eine am Verteilgestänge angeordnete Kamera (nicht darstellt) umfassen. Mittels der Kamera kann auch eine Lage der Verteilvorrichtungen 10 gegenüber einer Pflanzenreihe oder eines Pflanzenreihenrasters ermittelt werden.

Gemäß dieser Ausführungsvariante kann die Steuerungsvorrichtung 5 eingerichtet sein, ihre Steuersignale in Abhängigkeit von den von der Erfassungseinrichtung 7 erfassten Daten zu erzeugen, vorzugsweise zur Durchführung einer Bandapplikation und/oder zur Ansteuerung der Aufteilvorrichtung 15. Beispielsweise kann die Steuerungsvorrichtung 5 eingerichtet sein, anhand der Kameradaten einen Reihenabstand bzw. einen Abstand eines Pflanzenreihenrasters zu ermitteln und in Abhängigkeit hiervon wahlweise entweder zwei oder drei gleichzeitig erzeugte Streufächer pro Verteilvorrichtung 10 einzustellen, indem die Steuerungsvorrichtung 5 hierzu die Aufteilvorrichtung 15 zweckmäßig ansteuert. So kann beispielsweise bei größeren Reihenabständen der erste oder zweite Bandapplikations-Streubetrieb eingestellt werden (vgl. Figuren 2A und 2B) und bei kleineren Reihenabständen der dritte oder vierte Bandapplikations-Streubetrieb (vgl. Figuren 3A und 3B) eingestellt werden.

Ferner ist es möglich, dass die Steuerungsvorrichtung 5 eingerichtet ist, in Abhängigkeit von über das Bedienterminal 6 eingegebenen oder hinterlegten Angaben zu Reihenabständen und in Abhängigkeit von den von der Erfassungseinrichtung 7 erfassten Daten Steuersignale zur Veränderung einer Breite und/oder Lage der Auftreffbereiche 14 zu erzeugen. Dies betrifft insbesondere die vorstehend erläuterte Ausführungsform, bei der die Prallteller eine Aktorik zur Veränderung der Form der Prallflächen aufweisen und eine Schwenkvorrichtung aufweisen, um die Schwenkstellung des Pralltellers relativ zum Verteilgestänge zu verändern.

Ferner ist es möglich, dass die Steuerungsvorrichtung 5 eingerichtet ist, die Dosiervorrichtung 8 zur Dosierung des Streuguts in die Verteilleitungen 4 derart anzusteuern, dass die Dosierung des Streuguts in Abhängigkeit von der veränderlichen Anzahl von Streufächern anpassbar ist. Ferner kann auch jeder Verteilleitung 4 eine separate Dosiervorrichtung für Streugut zugeordnet sein, so dass in Abhängigkeit der Anzahl an Streufächer und/oder in Abhängigkeit der Breite der Streufächer optional die Menge an mittels der Dosiervorrichtungen dosiertem Verteilgut manuell (z. B. über das Bedienterminal 6) und/oder automatisiert angepasst werden kann.

### Bezugszeichenliste

- 1: Pneumatischer Düngerstreuer
- 2: Verteilgestänge
- 3: Ausleger
- 3a: Mittelteil
- 4: Verteilleitung
- 5: Steuerungsvorrichtung
- 6: Bedienterminal
- 7: Erfassungseinrichtung
- 8: Dosiervorrichtung
- 9: Trägerfahrzeug
- 10: Verteilvorrichtung
- 11, 11a, 11b, 11c,: Ausbringelement, z. B. Prallteller
- 12, 12a, 12b, 12c: Streufächer
- 13a, 13b: Streurichtung
- 14: Auftreffbereich
- 15: Aufteilvorrichtung
- 16a, 16b, 16c: Ausbringbereich
- 17: Streugutstrom
- 18a, 18b, 18c: Streugutteilstrom
- 19a, 19b, 19c: Zufuhrstrecke
- 20: Öffnungs-Schließmechanismus, z. B. Klappe
- 21: Vorratsbehälter
- 22: Anfangsbereich Streufächer
- 24: Streubreite
- V: Fahrtrichtung
- L: Längserstreckungsrichtung Verteilgestänge
- R: Pflanzenreihe
- Z: Zwischenbereich

## Patentansprüche

1. Pneumatischer Düngerstreuer (1), aufweisend ein Verteilgestänge (2) zum Ausbringen von körnigem Streugut, umfassend zwei seitliche Ausleger (3), die jeweils eine Mehrzahl von Verteilleitungen (4) und Verteilvorrichtungen (10) zum Ausbringen des Streuguts aufweisen, wobei das Streugut entlang der Verteilleitungen (4), die zumindest abschnittsweise am Verteilgestänge (2) angeordnet sind, mittels eines Luftvolumenstroms in Richtung der Verteilvorrichtungen (10) förderbar ist,
wobei die Verteilvorrichtungen (10) zum Ausbringen des Streuguts jeweils mindestens ein Ausbringelement (11), vorzugsweise einen Prallteller oder ein Leitelement, zur Ausbildung eines Streufächers (12) aus körnigem Streugut aufweisen, wobei
die Verteilvorrichtungen (10) jeweils zur Erzeugung einer veränderlichen Anzahl von Streufächern (12a, 12b, 12c) ausgebildet sind, wobei die Verteilvorrichtungen (10) jeweils eine konfigurierbare und/oder ansteuerbare Aufteilvorrichtung (15) aufweisen, die zur Erzeugung einer veränderlichen Anzahl von Streugut-Teilströmen (18) aus dem an der jeweiligen Verteilvorrichtung ankommenden Streugutstrom (17) ausgebildet ist,
**dadurch gekennzeichnet, dass** die Verteilvorrichtungen (10) jeweils unterschiedliche Ausbringbereiche (16a, 16b, 16c), nämlich unterschiedliche Prallflächen, zur Erzeugung unterschiedlicher Streufächer aufweisen, wobei mittels der Aufteilvorrichtung (15) veränderbar ist, zu welchen der Ausbringbereiche das eingangsseitig an der jeweiligen Verteilvorrichtung (10) ankommende Streugut gefördert wird.

2. Pneumatischer Düngerstreuer (1) nach Anspruch 1, wobei die Verteilvorrichtungen (10) jeweils zur wahlweisen Erzeugung von einem Streufächer, von zwei Streufächern (12a, 12b) und/oder vorzugsweise von drei Streufächern (12a, 12b, 12c) ausgebildet sind.

3. Pneumatischer Düngerstreuer (1) nach einem der vorherigen Ansprüche, wobei die Verteilvorrichtungen (10) jeweils ausgebildet sind, wahlweise benachbarte Streufächer (12a, 12b, 12c) mit unterschiedlichen Streurichtungen (13a, 13b, 13c) und/oder mit unterschiedlichen Auftreffbereichen (14), vorzugsweise mit überlappfreien Auftreffbereichen, des Streuguts zu erzeugen.

4. Pneumatischer Düngerstreuer (1) nach einem der vorherigen Ansprüche, wobei die Aufteilvorrichtung (15) für jeden der Ausbringbereiche eine eigene Zufuhrstrecke (19a, 19b, 19c), vorzugsweise ein eigenes Zufuhrrohr, aufweist, und eingangsseitig der Zufuhrstrecke(n) eine Weiche, Klappen und/oder ein Öffnungs-Schließmechanismus (20) angeordnet ist, womit einstellbar und/oder veränderbar ist, in welche der Zufuhrstrecke(n) (19a, 19b, 19c) das eingangsseitig an der jeweiligen Verteilvorrichtung (10) ankommende Streugut gefördert wird.

5. Pneumatischer Düngerstreuer (1) nach einem der vorherigen Ansprüche, wobei die unterschiedlichen Ausbringbereiche einer Verteilvorrichtung durch unterschiedliche Ausbringelemente (11a, 11b, 11c), vorzugsweise durch unterschiedliche Prallteller oder Leitelemente, ausgebildet sind, die benachbarte Streufächer mit unterschiedlicher Streurichtung erzeugen und vorzugsweise unterschiedlich orientiert am Verteilgestänge (2) befestigt sind.

6. Pneumatischer Düngerstreuer (1) nach einem der Ansprüche 1 bis 4 wobei die unterschiedlichen Ausbringbereiche einer Verteilvorrichtung (10) jeweils
a) durch ein einziges Ausbringelement ausgebildet sind, welches winkelig zueinander angeordnete Auftreffflächen zur Ausbildung der unterschiedlichen Ausbringbereiche aufweist; und/oder
b) durch einen einzigen mehrteilig ausgeführten Prallteller ausgebildet sind, wobei die einzelnen Abschnitte des Pralltellers zur Ausbildung der unterschiedlichen Ausbringbereiche zueinander verstellbar ausgeführt sind.

7. Pneumatischer Düngerstreuer (1) nach Anspruch 6, wobei das Ausbringelement mindestens einen Leitsteg zur Trennung der unterschiedlichen Ausbringbereiche und zur Führung des Streuguts innerhalb eines Auftreffbereichs aufweist.

8. Pneumatischer Düngerstreuer (1) nach einem der vorherigen Ansprüche 4 bis 7, ferner umfassend eine Steuerungsvorrichtung (5), die eingerichtet ist, zur Veränderung des Streubildes, vorzugsweise zur Durchführung einer Bandapplikation, die Aufteilvorrichtung (15) anzusteuern, um die Anzahl von Streugut-Teilströmen zu verändern.

9. Pneumatischer Düngerstreuer (1) nach Anspruch 8, wobei die Steuerungsvorrichtung (5) ein Bedienterminal umfasst oder in Signalverbindung mit einem Bedienterminal (6) steht und eingerichtet ist, in Abhängigkeit von über das Bedienterminal (6) eingegebenen oder hinterlegten Angaben zu Reihenabständen ein Steuersignal zu erzeugen, vorzugsweise zur Durchführung einer Bandapplikation und/oder zur Ansteuerung der Aufteilvorrichtung.

10. Pneumatischer Düngerstreuer (1) nach Anspruch 8 oder 9, wobei die Steuerungsvorrichtung (5) in Signalverbindung steht mit einer Erfassungseinrichtung (7) zur Erfassung einer Pflanzenreihe oder eines durch Pflanzenreihen gebildeten Pflanzenreihenrasters und/oder zur Erfassung einer Lage der Verteilvorrichtungen gegenüber einer Pflanzenreihe oder eines Pflanzenreihenrasters, und wobei die Steuerungsvorrichtung (5) eingerichtet ist, ihre Steuersignale in Abhängigkeit von den von der Erfassungseinrichtung (7) erfassten Daten zu erzeugen, vorzugsweise zur Durchführung einer Bandapplikation und/oder zur Ansteuerung der Aufteilvorrichtung (15).

11. Pneumatischer Düngerstreuer (1) nach einem der vorherigen Ansprüche, wobei die Verteilvorrichtungen (10) zur Veränderung von Auftreffbereichen (14) der Streufächer, vorzugsweise zur Veränderung einer Breite und/oder Lage der Auftreffbereiche, konfigurierbar und/oder ansteuerbar sind.

12. Pneumatischer Düngerstreuer (1) nach den Ansprüchen 10 bis 11, wobei die Steuerungsvorrichtung (5) eingerichtet ist, in Abhängigkeit von über das Bedienterminal (6) eingegebenen oder hinterlegten Angaben zu Reihenabständen und in Abhängigkeit von den von der Erfassungseinrichtung (7) erfassten Daten Steuersignale zur Veränderung einer Breite und/oder Lage der Auftreffbereiche (14) zu erzeugen.

13. Pneumatischer Düngerstreuer (1) nach einem der vorherigen Ansprüche, wobei zumindest ein Teil der Ausbringelemente (11) jeweils mittels einer Schwenkvorrichtung verschwenkbar am Verteilgestänge (2) angeordnet ist, zur Veränderung der Lage des Auftreffbereiches des Streufächers des Ausbringelements.

14. Pneumatischer Düngerstreuer (1) nach einem der vorherigen Ansprüche, wobei zumindest ein Teil der Ausbringelemente jeweils einen Prallteller oder ein Leitelement aufweist, dessen Form mittels einer Aktorik veränderbar ist, zur Veränderung einer Breite des Auftreffbereiches des Streufächers des Ausbringelements.

15. Pneumatischer Düngerstreuer (1) nach einem der vorherigen Ansprüche, umfassend mindestens eine Dosiervorrichtung (8) zur Dosierung des Streuguts in die Verteilleitungen (4), wobei die Dosierung des Streuguts in Abhängigkeit von der veränderlichen Anzahl von Streufächern anpassbar ist, vorzugsweise automatisiert anpassbar ist.

16. Pneumatischer Düngerstreuer (1) nach einem der vorherigen Ansprüche, wobei die Verteilvorrichtungen (10) jeweils über separate Dosiervorrichtungen mit Streugut versorgbar sind und jede der Verteilvorrichtungen über eine eigene Verteilleitung mit der ihr zugeordneten Dosiervorrichtung fluidisch in Verbindung steht, wobei eine Menge an Streugut, das einer Verteilvorrichtung von der ihr zugeordneten Dosiervorrichtung zuführbar ist, manuell und/oder automatisiert anpassbar ist, vorzugsweise in Abhängigkeit einer Anzahl und/oder Breite der Streufächer der Verteilvorrichtung manuell und/oder automatisiert anpassbar ist.

17. Pneumatischer Düngerstreuer (1) nach einem der vorherigen Ansprüche, wobei die Verteilvorrichtungen (10) zur Veränderung der Anzahl von Streufächern manuell konfigurierbar sind.

18. Pneumatischer Düngerstreuer (1) nach einem der vorherigen Ansprüche, wobei
a) die Verteilvorrichtungen (10) jeweils nur an einer der Verteilleitungen (4) zur Versorgung mit Streugut angeschlossen sind; und/oder
b) benachbarte Verteilvorrichtungen - in Längserstreckungsrichtung (L) des Verteilgestänges gesehen -, einen Abstand von mindestens 1 Meter, vorzugsweise von 1,5 Meter aufweisen; und/oder
c) Anfangsbereiche (22) der unterschiedlichen Streufächer (12a, 12b, 12c), die von der gleichen Verteilvorrichtung (10) erzeugbar sind, - in Längserstreckungsrichtung (L) des Verteilgestänges gesehen -, einen Abstand von ≤ 50 cm aufweisen.

## Claims

1. A pneumatic fertilizer spreader (1), comprising a distribution boom (2) for dispensing granular spreading material, comprising two lateral booms (3) each having a plurality of distribution lines (4) and distribution devices (10) for dispensing the spreading material, wherein the spreading material is conveyable along the distribution lines (4), which are arranged at least in sections on the distribution boom (2), by an air flow in the direction of the distribution devices (10), wherein the distribution devices (10) for dispensing the spreading material each comprise at least one spreading element (11), preferably an impact plate or a guide element, for forming a spread fan (12) of granular spreading material,
wherein the distribution devices (10) are each configured to generate a variable number of spread fans (12a, 12b, 12c), and wherein the distribution devices (10) each comprise a configurable and/or controllable divider device (15) configured to generate a variable number of partial flows (18) of the spreading material from the spreading-material flow (17) arriving at the respective distribution device,
**characterized in that** the distribution devices (10) each have different spreading regions (16a, 16b, 16c), namely different impact surfaces, for generating different spread fans, wherein, by means of the divider device (15), it is variable to which of the spreading regions the spreading material arriving at the inlet side of the respective distribution device (10) is conveyed.

2. The pneumatic fertilizer spreader (1) according to claim 1, wherein the distribution devices (10) are each configured for the selective generation of one spread fan, two spread fans (12a, 12b) and/or preferably three spread fans (12a, 12b, 12c).

3. The pneumatic fertilizer spreader (1) according to any one of the preceding claims, wherein the distribution devices (10) are each configured to selectively generate adjacent spread fans (12a, 12b, 12c) with different spreading directions (13a, 13b, 13c) and/or with different impact areas (14) of the spreading material, preferably with non-overlapping impact areas.

4. The pneumatic fertilizer spreader (1) according to any one of the preceding claims, wherein the divider device (15) comprises, for each of the spreading regions, a dedicated supply path (19a, 19b, 19c), preferably a dedicated supply tube, and a switch, flaps and/or an opening/closing mechanism (20) is arranged at the inlet side of the supply path(s), by means of which it is adjustable and/or variable into which of the supply path(s) (19a, 19b, 19c) the spreading material arriving at the inlet side of the respective distribution device (10) is conveyed.

5. The pneumatic fertilizer spreader (1) according to any one of the preceding claims, wherein the different spreading regions of a distribution device are formed by different spreading elements (11a, 11b, 11c), preferably by different impact plates or guide elements, which generate adjacent spread fans with different spreading directions and are preferably mounted to the distribution boom (2) with different orientations.

6. The pneumatic fertilizer spreader (1) according to any one of claims 1 to 4, wherein the different spreading regions of a distribution device (10) are each
a) formed by a single spreading element which has impact surfaces arranged at an angle to one another for forming the different spreading regions; and/or
b) formed by a single multi-part impact plate, wherein the individual sections of the impact plate are adjustable relative to one another for forming the different spreading regions.

7. The pneumatic fertilizer spreader (1) according to claim 6, wherein the spreading element (11) comprises at least one guide rib for separating the different spreading regions and for guiding the spreading material within an impact area.

8. The pneumatic fertilizer spreader (1) according to any one of claims 4 to 7, further comprising a control unit (5) which is configured, for changing the spread pattern, preferably for performing a band application, to actuate the divider device (15) in order to change the number of partial flows of the spreading material.

9. The pneumatic fertilizer spreader (1) according to claim 8, wherein the control unit (5) comprises an operator terminal or is in signal communication with an operator terminal (6) and is configured to generate a control signal in dependence on information regarding row spacings input via or stored in the operator terminal (6), preferably for performing a band application and/or for actuating the divider device (15).

10. The pneumatic fertilizer spreader (1) according to claim 8 or 9, wherein the control unit (5) is in signal communication with a detection device (7) for detecting a plant row or a plant-row grid formed by plant rows and/or for detecting a position of the distribution devices relative to a plant row or a plant-row grid, and wherein the control unit (5) is configured to generate its control signals in dependence on the data detected by the detection device (7), preferably for performing a band application and/or for actuating the divider device (15).

11. The pneumatic fertilizer spreader (1) according to any one of the preceding claims, wherein the distribution devices (10) are configurable and/or controllable for changing impact areas (14) of the spread fans, preferably for changing a width and/or a position of the impact areas.

12. The pneumatic fertilizer spreader (1) according to claims 10 to 11, wherein the control unit (5) is configured to generate control signals for changing a width and/or a position of the impact areas (14) in dependence on information regarding row spacings input via or stored in the operator terminal (6) and in dependence on the data detected by the detection device (7).

13. The pneumatic fertilizer spreader (1) according to any one of the preceding claims, wherein at least a part of the spreading elements (11) are in each case arranged pivotably on the distribution boom (2) by means of a pivoting device, for changing the position of the impact area of the spread fan of the spreading element.

14. The pneumatic fertilizer spreader (1) according to any one of the preceding claims, wherein at least a part of the spreading elements in each case comprise an impact plate or a guide element, the shape of which is changeable by means of an actuator, for changing a width of the impact area of the spread fan of the spreading element.

15. The pneumatic fertilizer spreader (1) according to any one of the preceding claims, comprising at least one metering device (8) for metering the spreading material into the distribution lines (4), wherein the metering of the spreading material is adjustable in dependence on the variable number of spread fans, preferably is automatically adjustable.

16. The pneumatic fertilizer spreader (1) according to any one of the preceding claims, wherein the distribution devices (10) are each suppliable with spreading material via separate metering devices and each of the distribution devices is in fluid communication with its associated metering device via a dedicated distribution line, wherein an amount of spreading material that can be supplied to a distribution device by its associated metering device is manually and/or automatically adjustable, preferably manually and/or automatically adjustable in dependence on a number and/or a width of the spread fans of the distribution device.

17. The pneumatic fertilizer spreader (1) according to any one of the preceding claims, wherein the distribution devices (10) are manually configurable for changing the number of spread fans.

18. The pneumatic fertilizer spreader (1) according to any one of the preceding claims, wherein
a) the distribution devices (10) are each connected to only one of the distribution lines (4) for supply with spreading material; and/or
b) adjacent distribution devices-as seen in the longitudinal direction (L) of the distribution boom-have a spacing of at least 1 meter, preferably 1.5 meters; and/or
c) initial regions (22) of the different spread fans (12a, 12b, 12c) that can be generated by the same distribution device (10)-as seen in the longitudinal direction (L) of the distribution boom-have a spacing of ≤ 50 cm.

## Revendications

1. Épandeur d'engrais pneumatique (1), présentant une rampe de distribution (2) pour décharger un produit à épandre granulaires, comprenant deux bras latéraux (3) qui présentent chacun une pluralité de conduites de distribution (4) et de dispositifs de distribution (10) pour décharger le produit à épandre, le produit à épandre pouvant être transporté le long des conduites de distribution (4), qui sont agencées au moins par sections sur la rampe de distribution (2), au moyen d'un flux volumique d'air en direction des dispositifs de distribution (10),
les dispositifs de distribution (10) pour décharger le produit à épandre présentant chacun au moins un élément de déchargement (11), de préférence un déflecteur ou un élément de conduction, pour réaliser un éventail d'épandage (12) à partir du produit à épandre granulaire, les dispositifs de distribution (10) étant chacun réalisés pour produire un nombre variable d'éventails d'épandage (12a, 12b, 12c), les dispositifs de distribution (10) présentant chacun un dispositif de répartition (15) configurable et/ou commandable, qui est réalisé pour produire un nombre variable de flux partiels de produit à épandre (18) à partir du flux de produit à épandre (17) arrivant au dispositif de distribution respectif,
**caractérisé en ce que** les dispositifs de distribution (10) présentent chacun différentes zones de déchargement (16a, 16b, 16c), à savoir différentes surfaces d'impact, pour produire différents éventails d'épandage, le dispositif de répartition (15) permettant de modifier vers lesquelles des zones de déchargement le produit à épandre arrivant côté entrée au niveau du dispositif de distribution (10) respectif est transporté.

2. Épandeur d'engrais pneumatique (1) selon la revendication 1, dans lequel les dispositifs de distribution (10) sont chacun réalisés pour produire au choix un éventail d'épandage, deux éventails d'épandage (12a, 12b) et/ou de préférence trois éventails d'épandage (12a, 12b, 12c).

3. Épandeur d'engrais pneumatique (1) selon l'une quelconque des revendications précédentes, dans lequel les dispositifs de distribution (10) sont chacun réalisés pour produire, au choix, des éventails d'épandage voisins (12a, 12b, 12c) avec des directions d'épandage différentes (13a, 13b, 13c) et/ou avec des zones d'impact différentes (14), de préférence avec des zones d'impact sans chevauchement, du produit à épandre.

4. Épandeur d'engrais pneumatique (1) selon l'une quelconque des revendications précédentes, dans lequel le dispositif de répartition (15) présente, pour chacune des zones de déchargement, une voie d'amenée propre (19a, 19b, 19c), de préférence un tuyau d'amenée propre, et un aiguillage, des clapets et/ou un mécanisme d'ouverture-fermeture (20) sont agencés du côté entrée de la ou des voies d'alimentation, ce qui permet de régler et/ou de modifier dans laquelle ou lesquelles des voies d'amenée (19a, 19b, 19c) le produit à épandre arrivant côté entrée au niveau du dispositif de distribution respectif (10) est transporté.

5. Épandeur d'engrais pneumatique (1) selon l'une quelconque des revendications précédentes, dans lequel les différentes zones de déchargement d'un dispositif de distribution sont réalisées par différents éléments de déchargement (11a, 11b, 11c), de préférence par différents déflecteurs ou éléments de conduction, qui produisent des éventails d'épandage voisins avec une direction d'épandage différente et sont de préférence fixés à la rampe de distribution (2) avec une orientation différente.

6. Épandeur d'engrais pneumatique (1) selon l'une quelconque des revendications 1 à 4, dans lequel les différentes zones de déchargement d'un dispositif de distribution (10) sont respectivement
a) réalisées par un seul élément de déchargement qui présente des surfaces d'impact agencées en angle les unes par rapport aux autres pour réaliser les différentes zones de déchargement ; et/ou
b) réalisées par un seul déflecteur conçu à plusieurs parties, les sections individuelles du déflecteur étant conçues pour pouvoir être réglées les unes par rapport aux autres afin de réaliser les différentes zones de déchargement.

7. Épandeur d'engrais pneumatique (1) selon la revendication 6, dans lequel l'élément de déchargement présente au moins une entretoise de conduction pour séparer les différentes zones de déchargement et pour guider le produit à épandre à l'intérieur d'une zone d'impact.

8. Épandeur d'engrais pneumatique (1) selon l'une quelconque des revendications 4 à 7 précédentes, comprenant en outre un dispositif de commande (5) qui est adapté pour modifier le profil d'épandage, de préférence pour effectuer une application en bande, afin de commander le dispositif de répartition (15) pour modifier le nombre de flux partiels de produit à épandre.

9. Épandeur d'engrais pneumatique (1) selon la revendication 8, dans lequel le dispositif de commande (5) comprend un terminal de contrôle ou est en liaison de signalisation avec un terminal de contrôle (6) et est adapté pour produire un signal de commande en fonction des informations sur les distances entre les rangées entrées ou enregistrées par l'intermédiaire du terminal de contrôle (6), de préférence pour effectuer une application en bande et/ou pour commander le dispositif de répartition.

10. Épandeur d'engrais pneumatique (1) selon la revendication 8 ou 9, dans lequel le dispositif de commande (5) est en liaison de signalisation avec un appareil de détection (7) pour détecter une rangée de plantes ou une trame de rangées de plantes formée par des rangées de plantes et/ou pour détecter une position des dispositifs de distribution par rapport à une rangée de plantes ou à une trame de rangées de plantes, et dans lequel le dispositif de commande (5) est adapté pour produire ses signaux de commande en fonction des données détectées par l'appareil de détection (7), de préférence pour effectuer une application en bande et/ou pour commander le dispositif de répartition (15).

11. Épandeur d'engrais pneumatique (1) selon l'une quelconque des revendications précédentes, dans lequel les dispositifs de distribution (10) sont configurables et/ou commandables pour modifier les zones d'impact (14) des éventails d'épandage, de préférence pour modifier une largeur et/ou une position des zones d'impact.

12. Épandeur d'engrais pneumatique (1) selon les revendications 10 à 11, dans lequel le dispositif de commande (5) est adapté pour produire des signaux de commande pour modifier une largeur et/ou une position des zones d'impact (14) en fonction des informations sur les distances entre les rangées entrées ou enregistrées par l'intermédiaire du terminal de contrôle (6) et en fonction des données détectées par l'appareil de détection (7).

13. Épandeur d'engrais pneumatique (1) selon l'une quelconque des revendications précédentes, dans lequel au moins une partie des éléments de déchargement (11) est agencée de manière pivotante sur la rampe de distribution (2) au moyen d'un dispositif de pivotement, afin de modifier la position de la zone d'impact de l'éventail d'épandage de l'élément de déchargement.

14. Épandeur d'engrais pneumatique (1) selon l'une quelconque des revendications, dans lequel au moins une partie des éléments de déchargement présente respectivement un déflecteur ou un élément de conduction dont la forme peut être modifiée au moyen d'un actionneur, afin de modifier une largeur de la zone d'impact de l'éventail d'épandage de l'élément de déchargement.

15. Épandeur d'engrais pneumatique (1) selon l'une quelconque des revendications précédentes, comprenant au moins un dispositif de dosage (8) pour doser le produit à épandre dans les conduites de distribution (4), le dosage du produit à épandre pouvant être adapté en fonction du nombre variable d'éventails d'épandage, de préférence de manière automatisée.

16. Épandeur d'engrais pneumatique (1) selon l'une quelconque des revendications précédentes, dans lequel les dispositifs de distribution (10) peuvent être alimentés en produit à épandre par l'intermédiaire de dispositifs de dosage séparés et chacun des dispositifs de distribution est relié fluidiquement au dispositif de dosage qui lui est associé par l'intermédiaire d'une conduite de distribution propre, une quantité de produit à épandre pouvant être amenée à un dispositif de distribution par le dispositif de dosage qui lui est associé pouvant être adaptée manuellement et/ou automatiquement, de préférence pouvant être adaptée manuellement et/ou automatiquement en fonction d'un nombre et/ou d'une largeur des éventails d'épandage du dispositif de distribution.

17. Épandeur d'engrais pneumatique (1) selon l'une quelconque des revendications précédentes, dans lequel les dispositifs de distribution (10) peuvent être configurés manuellement pour modifier le nombre d'éventails d'épandage.

18. Épandeur d'engrais pneumatique (1) selon l'une quelconque des revendications précédentes, dans lequel
a) les dispositifs de distribution (10) ne sont raccordés qu'à l'une des conduites de distribution (4) pour l'alimentation en produit à épandre ; et/ou
b) des dispositifs de distribution voisins présentent - vus dans la direction d'extension longitudinale (L) de la rampe de distribution - une distance d'au moins 1 mètre, de préférence de 1,5 mètre ; et/ou
c) des zones initiales (22) des différents éventails d'épandage (12a, 12b, 12c) pouvant être produits par le même dispositif de distribution (10) présentent - vues dans la direction d'extension longitudinale (L) de la rampe de distribution - une distance ≤ 50 cm.
